# EUROPEAN PATENT APPLICATION

(11) **EP 4 296 968 A1**
(43) Date of publication of application: **27.12.2023**
(21) Application number: 22180133.5
(22) Date of filing: 21.06.2022
(51) Int. Cl.: G06V 10/75, G06T 3/00, G06T 7/00, G06V 20/10, G06V 20/52, G06V 20/56

(54) **METHOD FOR LABELLING A WATER SURFACE WITHIN AN IMAGE, METHOD FOR PROVIDING A TRAINING DATASET FOR TRAINING, VALIDATING, AND/OR TESTING A MACHINE LEARNING ALGORITHM, MACHINE LEARNING ALGORITHM FOR DETECTING A WATER SURFACE IN AN IMAGE, AND WATER SURFACE DETECTION SYSTEM**

(71) Applicant: ABB SCHWEIZ AG, 5400 Baden (CH)
(72) Inventor: MARANO, Stefano, 8050 Zurich (CH); ARSENALI, Bruno, 5200 Brugg (CH); MAAS, Deran, 8046 Zurich (CH)
(74) Representative: Qip Patentanwälte Dr. Kuehn & Partner mbB

(57) **Abstract**

A method for labelling a water surface (22) within an image (20) is provided. The method comprises: receiving image data of the image (20) generated by a camera, the image (20) comprising at least one water surface (22); receiving water surface extension data, the water surface extension data being representative for an area (28) over which the water surface (22) extends in the real world; matching the water surface extension data to the image data depending on a spatial relationship between the camera and the area (28) of the water surface (22); and labelling the water surface (22) in the image (20) depending on the matched water surface extension data.

## Description

### FIELD OF THE INVENTION

The invention relates to the field of water surface detection and machine learning for water surface detection. In particular, the invention relates to a method for labelling a water surface within an image, to a method for providing a training dataset for training, validating, and/or testing a machine learning algorithm, to a machine learning algorithm for detecting a water surface in an image, a water surface detection system, a computer program, and a computer readable medium.

### BACKGROUND OF THE INVENTION

Water surface detection is an essential capability for many maritime systems. In particular, knowing the presence or absence of water is obviously very important for many maritime applications. A couple of applications are: a shoreline/water surface detection and/or a detection of a water gap between a dock and an own vessel as an assistant for a captain of the own vessel or for autonomous shipping, wherein it may be important to know the location of the water surface and/or wherein docking operations and navigation through locks may require to clearly distinguish the water surface from land and from any infrastructure on land; floating objects detection, wherein floating objects such as a container or another vessel may pose a danger to the navigation of the own vessel, to prevent a collision with the corresponding object; a detection of a person in water, wherein a small 'absence' of water may be a person in distress. So, water surface detection enables to spot obstacles to safe navigation, assist docking manoeuvres and understand where navigation is precluded.

An accurate and inexpensive water detection system may use one or more cameras in tandem with an image segmentation algorithm, which labels pixels in the image corresponding to water. In particular, an algorithm for image segmentation may be able to identify the presence of the water surface for each pixel of an image of the water surface. When it comes to image segmentation, deep learning solutions are the state-of-the-art and a corresponding image segmentation algorithm may be implemented with a deep neural network. Unfortunately, they require training with a large quantity of labelled images. Conventionally, the quantity of labelled images may be generated by manually labelling the water surface within the images showing the water surface. However, manual image labelling is time consuming, expensive, and error-prone. Therefore, there is a need for a method for automatic image labelling.

### DESCRIPTION OF THE INVENTION

It is an objective of the present invention to provide a method for labelling a water surface within an image, which enables an automatic image labelling of the water surface within the image and/or which contributes to a cheap and/or fast generation of a large dataset of labelled images for training a corresponding machine learning algorithm.

It is an objective of the present invention to provide a method for providing a training dataset for training, validating, and/or testing a machine learning algorithm, which enables an automatic image labelling of the water surface within the image and/or which contributes to a cheap and/or fast generation of a large dataset of labelled images for training a corresponding machine learning algorithm.

It is an objective of the present invention to provide a water surface detection system, which enables an automatic image labelling of the water surface within the image and/or which contributes a cheap and/or fast generation of a large dataset of labelled images for training a corresponding machine learning algorithm.

It is another objective of the present invention to provide a computer program for carrying out one of the above methods and/or a computer readable medium on which the corresponding computer program is stored.

These objectives are achieved by the subject-matter of the independent claims. Further exemplary embodiments are evident from the dependent claims and the following description.

An objective is achieved by a method for labelling a water surface within an image. The method comprises: receiving image data of the image generated by a camera, the image comprising at least one water surface; receiving water surface extension data, the water surface extension data being representative for an area over which the water surface extends in the real world; matching the water surface extension data to the image data depending on a spatial relationship between the camera and the area of the water surface; and labelling the water surface in the image depending on the matched water surface extension data.

The method enables an automatic image labelling of the water surface within the image and contributes to a cheap and/or fast generation of a large dataset of labelled images for training a corresponding machine learning algorithm.

The image data may be transferred from the camera to a computer carrying out the above method and may be stored on a memory of the computer. When the method is carried out by the computer, a processing unit of the computer may receive the image data from the memory. The water surface extension data may be gathered by a device different from the camera. The device may be a sensor, e.g. another imaging device. The water surface extension data may be transferred from the corresponding device to the computer carrying out the above method and may be stored on the memory of the computer. When the method is carried out by the computer, the processing unit of the computer may receive the water surface extension data from the memory.

The method may comprise an additional step of receiving image data of one or more images not comprising any water surface. In other words, in the step of receiving the image data there may be image data of images received, which do not show any water surfaces. Then the corresponding water surface extension data may be zero or not present at all. In this case, matching the water surface extension data to the image data is not possible. Then, the corresponding images, in particular the corresponding image data, may be labelled as not showing any water surface.

The camera is an imaging device sensitive for a frequency spectrum of the received electromagnetic radiation. For example, the camera may be a "normal" photo camera which is sensitive in the visual light spectrum or an IR, SWIR, or thermal camera which is sensitive in the thermal energy spectrum. The imaging device may comprise a corresponding imaging sensor, e.g., a CCD-array.

The area, over which the water surface extends in the real world, may be given by absolute values, such as coordinates, e.g. longitude and latitude, lengths, and/or widths of the water surface, or by relative values such as a spatial relationship between the device gathering the water surface extension data and the area over which the water surface extends.

There may be two or more distinct water surfaces in the image. In this case, the water surface extension data may be representative for the areas over which the corresponding water surfaces extend in the real world and all water surfaces shown in the image may be automatically labelled by the above method, e.g. one after the other or two or mor simultaneously.

That the water surface is labelled in the image may mean that the area over which the water surface extends in the image is marked within the image. For example, a boundary or border of the water surface may be drawn around the water surface and/or the whole water surface may be marked by a given colour. In particular, the image data may be modified by the labelling such that the water surface would be highlighted within the image by the border, e.g., the boundary, or the marked water surface when the labelled image is shown on a display. Alternatively or additionally, meta data may be added to the image data, wherein the meta data may be representative for the position and extension of the area over which the water surface extends within the image. Then, these meta data may be used during the training of the machine learning algorithm, wherein it is not necessary, that the correspondingly labelled image is shown on a display. The meta data may be simply referred to as labels of the images, in particular of the labelled images.

According to an embodiment, the spatial relationship between the camera and the area of the water surface is given by an absolute position and an absolute orientation of the camera, and an absolute position of the area of the water surface. The absolute positions may for example be given by coordinates, in particular real-world coordinates, e.g. by degrees of longitude and latitude.

The absolute position of the camera may be determined by GPS at the time the image is captured. The GPS data may refer to the position of the camera directly, or may refer to a position of a vehicle, e.g. a vessel or ship, on which the camera is mounted, wherein in the latter case the position of the camera on the vehicle may be calibrated, fixed, known, and considered when determining or using the position of the camera. In addition, the absolute position of the camera may comprise a height of the camera on the vehicle and/or, in case of a vessel, a current heave of the vessel, i.e. a current altitude of the whole vessel with respect the normal sea level and/or to one or more waves on the waterbody the vessel is sailing on.

The absolute orientation of the camera may be given by a cardinal direction in which the camera is directed. The cardinal direction may be determined by a compass. The compass may be directly coupled to the camera or a compass of the vehicle may be used, wherein in this case an angle between a main axis of the vehicle and the orientation of the camera may have to be considered. In addition, the absolute orientation of the camera may comprise a tilt of the camera with respect to the vehicle. Further, the vehicle may carry out different motions which may influence the absolute orientation of the camera. These motions may be considered and, in case of a vessel as the vehicle, may comprise a surge, sway, roll, pitch and/or yaw of the vessel.

So, when the camera is calibrated, there is a one-to-one relation between the position and orientation of the vehicle, e.g. the vessel, and the position and orientation of the camera. If the vehicle moves, e.g. because of the vehicle moving by its own or because of the vehicle being moved by external factors, e.g., by waves on the waterbody, the motion of the vehicle may be compensated when matching the water surface extension data to the image data depending on the spatial relationship. The motions may be compensated by using an inertial measurement unit of the vehicle.

The absolute position of the area of the water surface may be given by at least one pair of real-world coordinates and an extension of the area relative to the pair of real-world coordinates, wherein the extension may be given by one or more lengths and one or more widths of the area. Alternatively, the absolute position of the area of the water surface may be given by a set of pairs of real-world coordinates, the set defining points at a border or boundary of the area of the water surface, e.g. points at a shoreline of the corresponding lake or sea. Alternatively, the absolute position of the area of the water surface may be given by a set of pairs of real-world coordinates, the set defining all points of the area of the water surface.

According to an embodiment, the water surface extension data are a map, in particular a digital map, comprising the area of the water surface, in particular the corresponding data, and the absolute position of the area of the water surface, e.g. the corresponding real-world coordinates, is extracted from the map, in particular from the corresponding data. So, the map shows at least the one water surface and optionally two or more distinct water surfaces. After the machine learning algorithm is trained, the map is not needed anymore for identifying the water surface in an image accurately.

According to an embodiment, matching the water surface extension data to the image depending on the spatial relationship between the camera and the area of the water surface comprises extracting the area or a border, e.g. a boundary, of the area of the water surface from the map, and projecting the border from the map to the image depending on the absolute position and absolute orientation of the camera. The extracting of the area or the border of the area of the water surface from the map may comprise extracting pairs of coordinates representing the area or the border from the data given by the map. The border or boundary of the area of the water surface may be a shoreline of a lake, sea, or ocean comprising the water surface. The border may be projected from the map to the image by any conventional projection method known in the art, e.g. as explained and described in detail in a textbook about computer vision, e.g. "Multiple View Geometry in Computer Vision", R. Hartley, and A. Zisserman; Cambridge University Press, New York, NY, USA, 2 edition, (2003); ISBN: 978-0-521-54051-3, e.g., chapter 6, p. 154, where a projection of a world point on the image for an ideal camera is explained, and/or chapter 7, p. 191, where it is explained how to correct for any lens distortion. Alternatively, other conventional models of imaging devices and/or other lens distortion models may be used for the projection.

According to an embodiment, the water surface extension data are sensor data gathered by a sensor, and the spatial relationship between the camera and the area of the water surface is given by a fixed spatial relationship between the camera and the sensor. For example, the fixed spatial relationship may be given by a relative position and/or a relative orientation of the camera with respect to the sensor. For example, the fixed spatial relationship may be given by the position and orientation of the camera with respect to the vehicle, on which the camera is mounted, and by the position and orientation of the sensor for gathering the water surface extension data with respect to the vehicle, wherein the sensor is mounted on the same vehicle. After training the machine learning algorithm, the sensor is not needed anymore.

According to an embodiment, the fixed spatial relationship between the camera and the sensor comprises a distance between the camera and the sensor, a relative orientation of the camera and the sensor with respect to each other, and/or a height level of the camera relative to the sensor. So, in contrast to the preceding paragraph, the fixed spatial relationship may be given by the relative position and/or a relative orientation of the camera with respect to the sensor directly, in particular without any reference to the corresponding vehicle.

According to an embodiment, the matching of the water surface extension data to the image depending on the spatial relationship between the camera and the area of the water surface comprises extracting the area or a border of the area of the water surface from the sensor data and projecting the area or the border of the area to the image depending on the fixed spatial relationship between the camera and the sensor. In particular, the extracting of the border of the area of the water surface from the sensor data may comprise extracting pairs of coordinates representing the border from the sensor data given by the sensor. The border of the area of the water surface may be a shoreline of a lake, sea, or ocean comprising the water surface. Further, the extracting of the area of the water surface from the sensor data may comprise extracting pairs of coordinates representing the area from the sensor data given by the sensor. The area and/or the border may be projected from the sensor data to the image by any conventional projection method known in the art, e.g. as explained and described in the above textbook about computer vision.

According to an embodiment, the sensor comprises an imaging device, the other imaging device being configured for detecting water surfaces. The other imaging device may be a light polarization sensitive camera. In this case, the linearly polarized light reflected from the water surface can be detected using polarization filters of the light polarization sensitive camera. Alternatively, the other imaging device may be a multi/hyperspectral imaging device or simply another "normal" camera, wherein the correspondingly gathered spectral information may be used to detect the water surface. Alternatively, the other imaging device may be an infrared camera, e.g., an SWIR-, MIR-, or thermal-camera, etc. If the other imaging device is also a spectrally sensitive imaging device, e.g., the "normal", multi/hyperspectral-, thermal, or IR camera, the other imaging device may be spectrally sensitive in another energy and/or frequency spectrum as the camera. In other words, if two cameras are used to gather the corresponding image data and sensor data, at least two different kinds of cameras shall be used, in particular cameras which are different with respect to the energy and/or frequency spectrum in which they are sensitive.

If the sensor comprises or constitutes the other imaging device, the sensor data may represent a sensor image which may show the water surface only or clearly distinguishable from all other object visible in the corresponding image when being displayed on a screen. However, for carrying out the above method, it is not necessary to visualize the sensor data on a screen and the method may be carried out fully automatically without showing the corresponding sensor image on the screen.

According to an embodiment, the sensor comprises a lidar sensor and/or a radar sensor. The lidar and/or radar sensor enable to detect the land surrounding the water surface, thereby the border between the land and the water surface, and thereby the border of the water surface.

According to an embodiment, the method further comprises, after matching the water surface extension data to the image and before labelling the water surface in the image: receiving object information regarding at least one object except from land being in the water and extending from the water surface; determining an object area within the image depending on the object information, the object area being covered by the object; and labelling the water surface except from the object area. The object may be another vessel or any other object extending from the water, e.g. a container, a person, a buoy, etc. The object information may be received from the Automatic Identification System (AIS) or may be generated by an object detection algorithm analysing the image. The object detection algorithm may comprise or may constitute a neural network. The neural network may be any conventional artificial intelligence being trained for detecting objects in images, e.g. containers, persons, buoys, etc.

An objective is achieved by a method for providing a training dataset for training, validating, and/or testing the machine learning algorithm in order to enable the machine learning algorithm to detect the water surface in the image. The method comprises providing an amount of unlabelled images as features for the training, each of the images showing at least one water surface; and providing an amount of labelled images, wherein the labelled images respectively correspond to the unlabelled images and wherein each of the labelled images has been labelled by the above method. So, the method for providing the training dataset for training, validating, and/or testing the machine learning algorithm may comprise or use the method for labelling the water surface within the image, wherein the method for labelling the water surface within the image may be carried out several times, e.g. one time for each image to be labelled, when the method for providing the training dataset for training, validating, and/or testing the machine learning algorithm is carried out once.

It has to be understood that features of the method for labelling the water surface within the image as described in the above and in the following may be features of the method for providing the training dataset for training, validating, and/or testing the machine learning algorithm as described in the above and in the following.

An objective is achieved by the machine learning algorithm for detecting the water surface in the image, wherein the machine learning algorithm has been trained by at least one of the above methods. "Detecting" may mean in this context that the machine learning algorithm may be configured to recognize whether there is any water surface in the image or not. Alternatively or additionally, "detecting" may mean in this context that the machine learning algorithm determine the water surface within the image by image segmentation, e.g. semantic segmentation, e.g. by a pixel wise segmentation of the image.

It has to be understood that features of the method for labelling the water surface within the image and/or of the method for providing the training dataset for training, validating, and/or testing the machine learning algorithm as described in the above and in the following may be features of the machine learning algorithm for detecting the water surface in the image as described in the above and in the following.

An objective is achieved by a water surface detection system for detecting the water surface in the image. The system comprises a camera for generating image data of the image, the image comprising the at least one water surface; a memory comprising the water surface extension data, the water surface extension data being representative for the area over which the water surface extends in the real world; and a controller configured for matching the water surface extension data to the image data depending on the spatial relationship between the camera and the area of the water surface, and for labelling the water surface in the image depending on the matched water surface extension data. The water surface extension data may be stored in the memory in advance, may be downloaded from the internet, or may be generated by the sensor and stored in the memory.

It has to be understood that features of the methods as described in the above and in the following may be features of the water surface detection system as described in the above and in the following.

According to an embodiment, the water surface detection system further comprises the sensor for gathering the water surface extension data. The sensor may comprise the other imaging device, the other imaging device being configured for detecting water surfaces, the lidar sensor, and/or the radar sensor.

An objective is achieved by a computer program, comprising instructions configured for carrying out at least one of the above methods when the computer program is carried out by a processing unit of a computer or by the controller of the above water surface detection system. It has to be understood that features of the methods as described in the above and in the following may be features of the computer program as described in the above and in the following.

An objective is achieved by a computer readable medium, on which the trained machine learning algorithm and/or the above computer program are stored. It has to be understood that features of the methods as described in the above and in the following may be features of the computer program as described in the above and in the following.

The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a flow diagram of an exemplary embodiment of a method for labelling a water surface within an image;
Fig. 2 shows an example of an image showing a water surface;
Fig. 3 shows an example of a map showing the water surface of figure 2;
Fig. 4 shows an example of an image showing a water surface and an object extending from the water surface;
Fig. 5 shows an example of an image showing a water surface and a vessel swimming in the water;
Fig. 6 shows a flow diagram of an exemplary embodiment of a method for labelling a water surface within an image; and
Fig. 7 shows an example of a special image captured by an imaging device.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

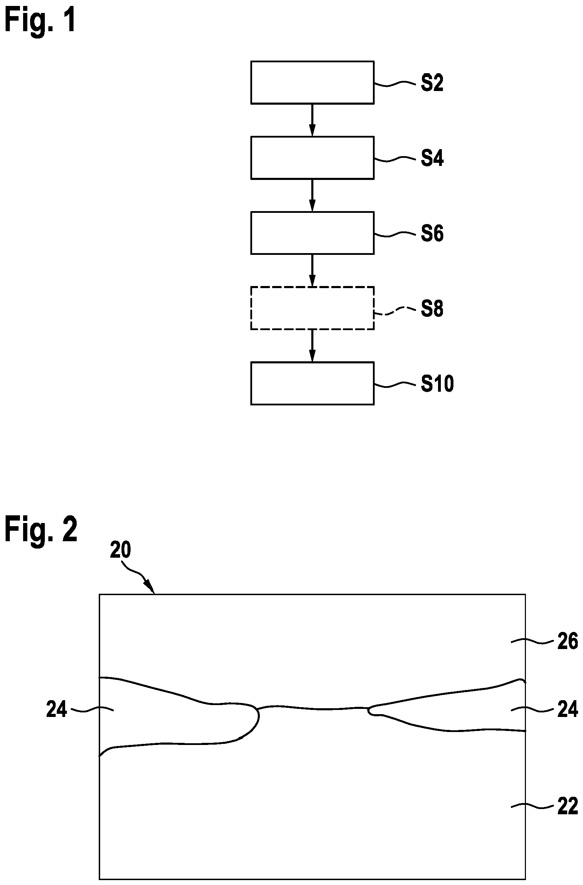

Fig. 1 shows a flow diagram of an exemplary embodiment of a method for labelling a water surface 22 within an image 20 (see figure 2). The method may be carried out by a general-purpose computer or by a water surface detection system as described below. The image 20 and preferably a huge amount of further images 20 each labelled by the method may be used for training a machine learning algorithm such that it is able to label water surfaces 22 in unknown images 20.

Fig. 2 shows an example of the image 20 showing the water surface 22. The image 20 may show the water surface 22, land 24, e.g. two spits of land, and the sky 26. There is only one continuous water surface 22 shown in the image 20. Another image 20 may show two or more water surfaces 22 separated from each other.

In a step S2, image data of the image 20 generated by a camera (not shown) are received, e.g. by a processing unit of the general-purpose computer or, respectively, by a controller of the water surface detection system. The image data may be transferred from the camera to the general-purpose computer carrying out the method and may be stored in a memory of the computer. When the method is carried out by the general-purpose computer, the processing unit of the general-purpose computer may receive the image data from the memory.

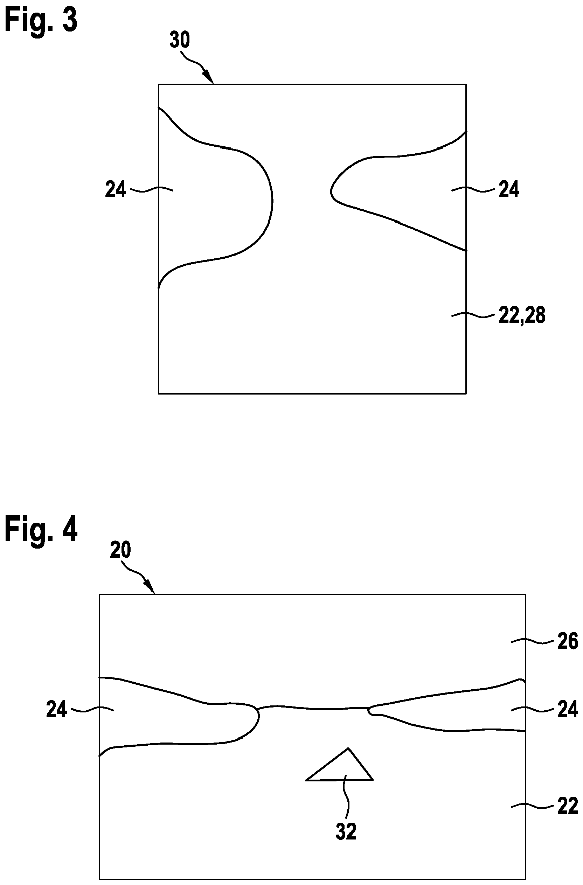

In a step S4, water surface extension data may be received, e.g. by the processing unit of the general-purpose computer or, respectively, by the controller of the water surface detection system. The water surface extension data may be representative for an area over which the water surface extends in the real world. For example, the water surface extension data represent a map, in particular a digital map, e.g. a map 30 as shown in figure 3. The area, over which the water surface 22 in the real world extends, may be given by absolute values, such as coordinates, e.g. real-world coordinates such as degrees of longitude and latitude, lengths, and/or widths of the water surface 22, or by relative values such as a spatial relationship between the device gathering the water surface extension data and the area over which the water surface 22 extends. There may be two or more distinct water surfaces 22 in the image 20. In this case, the water surface extension data may be representative for the areas over which the corresponding water surfaces 22 extend in the real world. When the method is carried out by the computer, the processing unit of the general-purpose computer may receive the water surface extension data from the memory of the general-purpose computer or from the internet.

Figure 3 shows an example for the map 30 showing the water surface 22 of figure 2. The map 30 may comprise the area of the water surface 22, in particular the corresponding data, which is also shown in the image 20. The absolute position of the area of the water surface 22, e.g. the corresponding real-world coordinates, may be extracted from the map 30, in particular from the corresponding data. So, the map 30 shows at least the one water surface 22. As another example, the map 30 may show two or more distinct water surfaces 22 being separated from each other. The map may be any open-source map, e.g. open street maps, or e.g. google maps. Optionally, a three-dimensional elevation map may be used as the map 30. This may improve an accuracy of the following matching step.

In a step S6, the water surface extension data are matched to the image 20, in particular to the corresponding image data, depending on a spatial relationship between the camera and the area of the water surface 22. The spatial relationship between the camera and the area of the water surface 22 may be given by an absolute position and an absolute orientation of the camera, and an absolute position of the area of the water surface 22.

The absolute positions may for example be given by coordinates, in particular real-world coordinates, e.g. by degrees of longitude and latitude. The absolute position of the camera may be determined by GPS at the time the image 20 is captured. The GPS data may refer to the position of the camera directly, or may refer to a position of a vehicle, e.g. a vessel or ship, on which the camera is mounted, wherein in the latter case the position of the camera on the vehicle may be calibrated, fixed, known, and considered when determining or using the position of the camera. In addition, the absolute position of the camera may comprise a height of the camera on the vehicle and/or, in case of a vessel, a current heave of the vessel, i.e. a current altitude of the whole vessel with respect the normal sea level and/or to one or more waves on the waterbody the vessel is sailing on. So, the camera may be calibrated such that the orientation and/or a pose of the camera are known.

The absolute orientation of the camera may be given by a cardinal direction in which the camera is directed. The cardinal direction may be determined by a compass. The compass may be directly coupled to the camera or a compass of the vehicle may be used, wherein in this case an angle between a main axis of the vehicle and the orientation of the camera, if any, may have to be considered. In addition, the absolute orientation of the camera may comprise a tilt of the camera with respect to the vessel. Further, in case of a vessel as the vehicle, the vessel may carry out different motions which may influence the absolute orientation of the camera. These motions may be considered and may comprise a surge, sway, roll, pitch and/or yaw of the vessel.

So, when the camera is calibrated, there is a one-to-one relation between the position and orientation of the vehicle, e.g. the vessel, and the position and orientation of the camera. If the vehicle moves, e.g. because of the vehicle moving by its own or because of the vehicle being moved by external factors, e.g., by waves on the waterbody, the motion of the vehicle may be compensated when matching the water surface extension data to the image data depending on a spatial relationship. The motions may be compensated by using an inertial measurement unit of the vehicle.

The absolute position of the area of the water surface 22 may be given by at least one pair of real-world coordinates and an extension of the area relative to the pair of real-world coordinates, wherein the extension may be given by one or more lengths and one or more widths of the area. Alternatively, the absolute position of the area of the water surface 22 may be given by a set of pairs of real-world coordinates, the set defining points at a border of the area of the water surface 22, e.g. points at a shoreline of the corresponding lake or sea. Alternatively, the absolute position of the area of the water surface may be given by a set of pairs of real-world coordinates, the set defining all points of the area of the water surface 22.

The matching of the water surface extension data to the image depending on the spatial relationship between the camera and the area of the water surface may comprise extracting the area or a border, e.g., a boundary, of the area of the water surface 22 from the map 30 and projecting the border from the map 30 to the image 20 depending on the absolute position and absolute orientation of the camera. The extracting of the area or the border of the area of the water surface 22 from the map may comprise extracting pairs of coordinates representing the area or the border from the data given by the map 30. The border of the area of the water surface 22 may be a shoreline of a lake, sea, or ocean comprising the water surface 22. The border may be projected from the map 30 to the image 20 by any conventional projection method known in the art, e.g. as explained and described in detail in the above textbook about computer vision.

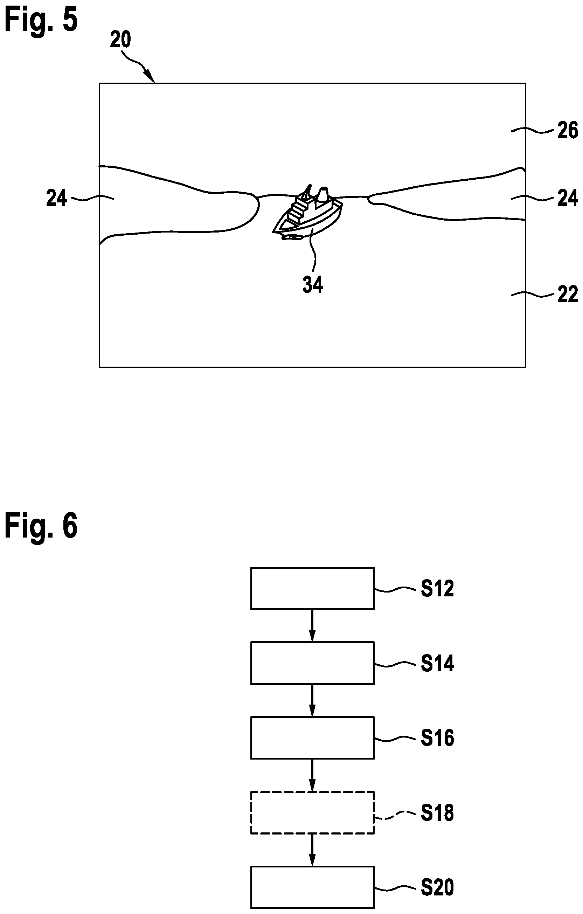

In an optional step S8, object information regarding at least one object 32, 34 (see figures 4 and 5) except from land 24 being in the water and extending from the water surface 22 may be received by the controller or the processing unit, and an object area within the image 20 may be determined depending on the object information, wherein the object area is covered by the object 32, 34. The object information may be received from the Automatic Identification System (AIS) or may be generated by an object detection algorithm analysing the image 20. When using AIS, the camera preferably may be calibrated, e.g. to be able to project the detected object, e.g. another vessel, in real-world coordinates on the image 20. The object detection algorithm may comprise or may constitute a neural network. The neural network may be any conventional artificial intelligence being trained for detecting objects 23 in images 20, e.g. containers, persons, buoys, etc.

Fig. 4 shows an example of the image 20 showing the water surface 22 and the object 32 extending from the water surface 22. The object 23 and its position and extension within the image 20 may be determined by the object detection algorithm.

Fig. 5 shows an example of the image 20 showing the water surface 22 and a vessel 34 swimming in the water, wherein the vessel 34 may be one example for a detected object 32.

In a step S10, the water surface 22 in the image 20 may be labelled depending on the matched water surface extension data. In particular, all water surfaces 22 shown in the image 20 may be automatically labelled, e.g. one after the other or two or more simultaneously. If optional step S8 has been carried out and if at least one object 23 has been found in the water, the water surface 22 may be labelled except from the corresponding object area covered by the object 23. The object 32, 34 may be another vessel or any other object extending from the water, e.g. a container, a person, a buoy, etc. If the object 32, 34 is another vessel 34, the object information may be received from AIS or may be generated by the object detection algorithm.

That the water surface 22 is labelled in the image 20 may mean that the area over which the water surface 22 extends in the image 20 is marked within the image 20. For example, a border, e.g., a boundary, of the water surface 22 may be drawn around the water surface 22 and/or the water surface 22 may be marked by a given colour. In particular, the image data may be modified by the labelling such that the water surface 22 would be highlighted within the labelled image 20 by the border or the marked water surface 22 when the labelled image 20 is shown on a display. Alternatively or additionally, meta data may be added to the image data, wherein the meta data may be representative for the area over which the water surface 22 extends within the image 20. Then, these meta data may be used during the training of the machine learning algorithm, wherein it is not necessary, that the correspondingly labelled image 20 is shown on a display.

When the image 20 is labelled, another image 20 showing at least one water surface 22 may be labelled correspondingly. So, the above method may be carried out several times in order to automatically provide a huge amount of images 20 showing labelled images 20. Further, some images 20 not showing water may be received from the device carrying out the method, wherein the corresponding water surface extension data may not be present or may be set to zero. Then, these images 20 may be labelled as not showing any water surface. The huge amount of labelled images 20 may be used for training a machine learning algorithm such that it is able to label the water surface 22 in any unknown image 20 showing a water surface 22. As such, a method for providing a training dataset for training, validating, and/or testing the machine learning algorithm in order to enable the machine learning algorithm to detect the water surface 22 in the image 20 may be provided. The method comprises providing an amount of unlabelled images 20 as features for the training, each of the images 20 showing at least one water surface 22, and providing an amount of labelled images, wherein the labelled images 20 respectively correspond to the unlabelled images 20 and wherein each of the labelled images 20 has been labelled by the above method. So, the method for providing the training dataset for training, validating, and/or testing the machine learning algorithm may comprise or use the method for labelling the water surface 22 within the image 20, wherein the method for labelling the water surface 22 within the image 20 may be carried out several times, e.g. one time for each image 20 to be labelled, when the method for providing the training dataset for training, validating, and/or testing the machine learning algorithm is carried out once. The amount of labelled images 20 may constitute the training dataset. After the training, the correspondingly trained machine learning algorithm is able to detect the water surface 22 in the image 20 automatically.

The machine learning algorithm may be used by a water surface detection system for detecting the water surface 22 in the image 20. The system may comprise the camera for capturing the image 20, with the image 20 showing the at least one water surface 22, and for generating the image data corresponding to the image 20. The system may further comprise the memory comprising the water surface extension data, the water surface extension data being representative for the area over which the water surface 22 extends in the real world. The system may further comprise the controller configured for matching the water surface extension data to the image data depending on the spatial relationship between the camera and the area of the water surface 22. The controller may further be configured for labelling the water surface 22 in the image 20 depending on the matched water surface extension data. The water surface extension data may be stored in the memory in advance, may be downloaded from the internet, or may be generated by a sensor and stored in the memory, as explained with respect to figure 6.

Fig. 6 shows a flow diagram of an exemplary embodiment of a method for labelling a water surface within an image, e.g. the water surface 22 in the image 20.

In a step S12, the image data of the image 20 captured by the camera (not shown) are received, e.g. by the processing unit of the general-purpose computer or, respectively, by the controller of the water surface detection system. The image data may be transferred from the camera to the processing unit or controller carrying out the method and may be stored in the memory. When the method is carried out by the general-purpose computer, the processing unit of the general-purpose computer may receive the image data from the memory. When the method is carried out by the water surface detection system, the controller the water surface detection system may receive the image data from the memory or directly from the camera.

In a step S14, the water surface extension data may be received, e.g. by the processing unit of the general-purpose computer or, respectively, by the controller of the water surface detection system. The water surface extension data may be representative for the area over which the water surface extends in the real world. For example, the water surface extension data may be gathered by a device different from the camera, e.g. by a sensor, e.g. by the above sensor. The water surface extension data may be transferred from the corresponding device to the general-purpose computer or the controller carrying out the above method and may be stored on the memory of the computer or, respectively, the controller, or may be processed directly. The water surface extension data may be sensor data gathered by the sensor. For example, the water surface detection system further comprises the sensor for gathering the water surface extension data. The sensor may comprise a lidar sensor, a radar sensor, and/or another imaging device, the imaging device being configured for detecting water surfaces. The other imaging device may be a light polarization sensitive camera, a multi/hyperspectral imaging device or simply another "normal" camera, an infrared camera, e.g., a SWIR-, MIR-, or thermal-camera, etc. If the other imaging device is also a camera, e.g., the "normal", multi/hyperspectral-, thermal, or IR camera, the other imaging device may be spectrally sensitive in another energy and/or frequency spectrum as the camera. In other words, if two cameras are used for gathering the corresponding data, at least two different kinds of cameras may be used, in particular with respect to the energy and/or frequency spectrum in which they are sensitive.

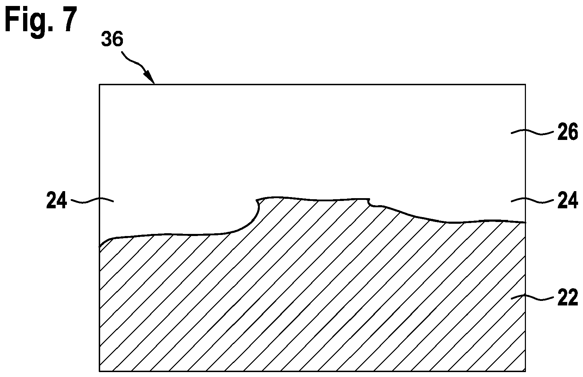

The sensor may exploit the physical properties of water to differentiate water and thereby the water surface 22 from other objects, land, and/or the sky. For example, light reflected off the water surface 22 is partially polarized in a direction parallel to the water surface 22. The polarization can be measured by using the corresponding imaging device, i.e. the light polarization sensitive camera, providing two different optical paths with linear polarizing films attached to the front of the corresponding lens. One optical path may be sensitive to horizontal polarized light and the other optical path may be sensitive to vertical polarized light. Using image processing, the water surface 22 may be detected (see Figure 7). If the sensor comprises or constitutes the other imaging device, the sensor data may represent a special image 36 (see figure 7) which may show only the water surface 22 when being displayed on a screen. However, for carrying out the above method, it is not necessary to visualize the sensor data on a screen and the method may be carried out fully automatically without showing the corresponding special image 36 on the screen. After training the machine learning algorithm, the sensor is not needed anymore.

Fig. 7 shows an example of a special image 36 captured by the camera. A scene which is captured with the special image 36 corresponds to the scene captured with the image 20. In other words, the real-world area illustrated in the special image 36 is the same real-world area illustrated in the image 20, wherein the illustration in the special image 36 is different from the illustration in the "normal" image 20. For example, if the other imaging device is the light polarization sensitive camera, in the special image 36 the water surface 22 may coloured, e.g. red, orange, or yellow, whereas the land 24 and the sky 26 may be black, because the polarization sensitive camera may be configured to capture polarized light only. In particular, light reflected from the water surface 22 is linearly polarized and can be detected using polarization filters of the corresponding light polarization sensitive camera. Similar outputs as the special image 36 may also be generated by the multi/hyperspectral camera, and/or the infrared camera. For example, if the other imaging device is the multi/hyperspectral camera, the correspondingly gathered spectral information may be used to detect the water surface 22. If the sensor is the lidar and/or radar sensor, the sensor may detect the land 24 surrounding the water surface, thereby the border between the land 24 and the water surface 22, and thereby the border of the water surface 22.

In a step S16, the water surface extension data are matched to the image 20 depending on a spatial relationship between the camera and the area of the water surface 22. The spatial relationship between the camera and the area of the water surface 22 may be given by a fixed spatial relationship between the camera and the sensor detecting the water surface 22. For example, the fixed spatial relationship may be given by a relative position and/or a relative orientation of the camera with respect to the sensor. For example, the fixed spatial relationship may be given by the position and orientation of the camera with respect to the vehicle, on which the camera is mounted, and by the position and orientation of the sensor for gathering the water surface extension data with respect to the vehicle, wherein the sensor is mounted on the same vehicle. Alternatively or additionally, the fixed spatial relationship between the camera and the sensor may comprise a distance between the camera and the sensor, a relative orientation of the camera and the sensor with respect to each other, and/or a height level of the camera relative to the sensor. So, the fixed spatial relationship may be given by the relative position and/or a relative orientation of the camera with respect to the sensor directly, in particular without any reference to the corresponding vehicle.

The matching of the water surface extension data to the image 20 depending on the spatial relationship between the camera and the area of the water surface 22 may comprise extracting the area or the border, e.g., the boundary, of the area of the water surface from the sensor data and projecting the border to the image 20 depending on the fixed spatial relationship between the camera and the sensor. In particular, the extracting of the area or the border of the area of the water surface 22 from the sensor data may comprise extracting pairs of coordinates representing the area or the border from the sensor data given by the sensor. The border of the area of the water surface 22 may be a shoreline of a lake, sea, or ocean comprising the water surface 22. The area or the border may be projected from the sensor data to the image, in particular the image data, by any conventional projection method known in the art, e.g. as explained and described in detail in the above textbook about computer vision.

In an optional step S 18, the object information regarding at least one object 32, 34 (see figures 4 and 5) except from land 24 being in the water and extending from the water surface 22 may be received by the controller or the processing unit, and an object area within the image 20 may be determined depending on the object information, wherein the object area is covered by the object 24. The object information may be received from the Automatic Identification System (AIS) or may be generated by the object detection algorithm analysing the image 20. The object detection algorithm may comprise or may constitute a neural network. The neural network may be any conventional artificial intelligence being trained for detecting objects 23 in images 20, e.g. containers, persons, buoys, etc.

In a step S20, the water surface 22 in the image 20 may be labelled depending on the matched water surface extension data, e.g. as explained with respect to step 10 of figure 1.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: image
- 22: water surface
- 24: land
- 26: sky
- 28: area
- 30: map
- 32: object
- 34: ship
- 36: special image
- S2-S20: steps two to twenty

## Claims

1. Method for labelling a water surface (22) within an image (20), the method comprising:
receiving image data of the image (20) generated by a camera, the image (20) comprising at least one water surface (22);
receiving water surface extension data, the water surface extension data being representative for an area (28) over which the water surface (22) extends in the real world;
matching the water surface extension data to the image data depending on a spatial relationship between the camera and the area (28) of the water surface (22); and
labelling the water surface (22) in the image (20) depending on the matched water surface extension data.

2. Method in accordance with claim 1, wherein
the spatial relationship between the camera and the area (28) of the water surface (22) is given by an absolute position and an absolute orientation of the camera, and an absolute position of the area (28) of the water surface (22).

3. Method in accordance with claim 2, wherein
the water surface (22) extension data are represented by a map (30) comprising the area (28) of the water surface (22); and
the absolute position of the area (28) of the water surface (22) is extracted from the map (30).

4. Method in accordance with claim 3, wherein matching the water surface (22) extension data to the image (20) depending on the spatial relationship between the camera and the area (28) of the water surface (22) comprises
extracting the area (28) of the water surface (22) from the map (30); and
projecting the area (28) or a border of the area (28) from the map (30) to the image (20) depending on the absolute position and absolute orientation of the camera.

5. Method in accordance with claim 1, wherein
the water surface (22) extension data are sensor data gathered by a sensor; and
the spatial relationship between the camera and the area (28) of the water surface (22) is given by a fixed spatial relationship between the camera and the sensor.

6. Method in accordance with claim 5, wherein
the fixed spatial relationship between the camera and the sensor comprises a distance between the camera and the sensor, a relative orientation of the camera and the sensor with respect to each other, and/or a height level of the camera relative to the sensor.

7. Method in accordance with one of claims 5 or 6, wherein matching the water surface (22) extension data to the images depending on the spatial relationship between the camera and the area (28) of the water surface (22) comprises:
extracting the area (28) or a border of the area (28) of the water surface (22) from the sensor data; and
projecting the area (28) or the border of the area (28) to the image (20) depending on the fixed spatial relationship between the camera and the sensor.

8. Method in accordance with one of claims 5 to 7, wherein
the sensor comprises another imaging device, the other imaging device being configured for detecting water surfaces (22).

9. Method in accordance with one of claims 5 to 8, wherein
the sensor comprises a lidar sensor and/or a radar sensor.

10. Method in accordance with one of the preceding claims, further comprising, after matching the water surface (22) extension data to the image data and before labelling the water surface (22) in the image (20):
receiving object information regarding at least one object (32, 34) except from land (24) being in the water and extending from the water surface (22);
determining an object area within the image (20) depending on the object information, the object area being covered by the object (32, 34); and
labelling the water surface (22) except from the object area.

11. Method for providing a training dataset for training, validating, and/or testing a machine learning algorithm in order to enable the machine learning algorithm to detect a water surface (22) in an image (20), the method comprising:
providing an amount of unlabelled images (20) as features for the training, each of the images (20) showing at least one water surface (22); and
providing an amount of labelled images (20), wherein the labelled images (20) respectively correspond to the unlabelled images (20) and wherein each of the labelled images (20) has been labelled by the method according to one of the preceding claims.

12. Machine learning algorithm for detecting a water surface (22) in an image (20), wherein the machine learning algorithm has been trained by the method in accordance with claim 11.

13. Water surface detection system for detecting a water surface (22) in an image (20), the system comprising:
a camera for generating image data of the image (20), the image (20) comprising at least one water surface (22);
a memory comprising water surface extension data, the water surface (22) extension data being representative for an area (28) over which the water surface (22) extends in the real world;
a controller configured for matching the water surface extension data to the image data depending on a spatial relationship between the camera and the area (28) of the water surface (22), and for labelling the water surface (22) in the image (20) depending on the matched water surface (22) extension data.

14. Water surface detection system according to claim 13, further comprising:
a sensor for gathering the water surface extension data.

15. Computer program, comprising instructions configured for carrying out the method in accordance with one of claims 1 to 10, and/or the method in accordance with claim 11 when the computer program is carried out by a processor of a computer.

16. Computer readable medium, on which the machine learning algorithm according to claim 12 and/or the computer program according to claim 15 are stored.
